Europäisches Patentamt

European Patent Office

Office européen des brevets

(19)

(11) Publication number: **0 087 606**

**A1**

(12)

# EUROPEAN PATENT APPLICATION

(21) Application number: **83101013.7**

(22) Date of filing: **03.02.83**

(51) Int. Cl.³: **H 04 N 5/782**

(30) Priority: **03.03.82 JP 32463/82**

(43) Date of publication of application:
**07.09.83 Bulletin 83/36**

(84) Designated Contracting States:
**DE FR GB NL**

(71) Applicant: **Hitachi, Ltd.**
**5-1, Marunouchi 1-chome**
**Chiyoda-ku Tokyo 100(JP)**

(71) Applicant: **HITACHI DENSHI KABUSHIKI KAISHA**
**23-2, Kanda-suda-cho, 1-chome**
**Chiyoda-ku Tokyo(JP)**

(72) Inventor: **Mita, Seiichi**
**2644-55, Kawajiri Shiroyama-cho**
**Tsukui-gun Kanagawa-ken(JP)**

(72) Inventor: **Fujiwara, Hideo**
**1272-50, Shimotomi**
**Tokorozawa-shi Saitama-ken(JP)**

(72) Inventor: **Kougami, Akihiko**
**3-1-3, Higashi-koigakubo**
**Kokubunji-shi Tokyo(JP)**

(72) Inventor: **Kumasaka, Noriyuki**
**1-1-24, Suehiro-cho**
**Ohme-shi Tokyo(JP)**

(74) Representative: **Altenburg, Udo, Dipl.-Phys. et al,**
**Patent- und Rechtsanwälte**
**Bardehle-Pagenberg-Dost-Altenburg & Partner Postfach**
**86 06 20**
**D-8000 München 86(DE)**

(54) Magnetic recording device having multichannel head.

(57) The present invention relates to a magnetic recording device for recording or playing back television image and audio signals onto or from a magnetic tape (T) in a VTR, and is so constructed that multichannel heads (A, B) in the VTR are disposed in the maximum integral number which is not greater than the ration (P/C) between the track pitch P of the multichannel head and the track width C of each head chip ($A_1$, $A_2$, $A_3$, $A_4$; $B_1$, $B_2$, $B_3$, $B_4$) constituting the multichannel head. This has realized a very high recording density of the magnetic tape.

FIG. 3

FIG. 4

EP 0 087 606 A1

**0087606**

Hitachi, Ltd.
Hitachi Denshi Kabushiki Kaisha

February 3, 1983
H 4401-EP

Title of the Invention:

Magnetic Recording Device having Multichannel Head

Background of the Invention:

The present invention relates to a magnetic recording device characterized by the arrangement scheme of multichannel heads for recording or playing back television image and audio signals in a video tape recorder (hereinafter, abbreviated to "VTR").

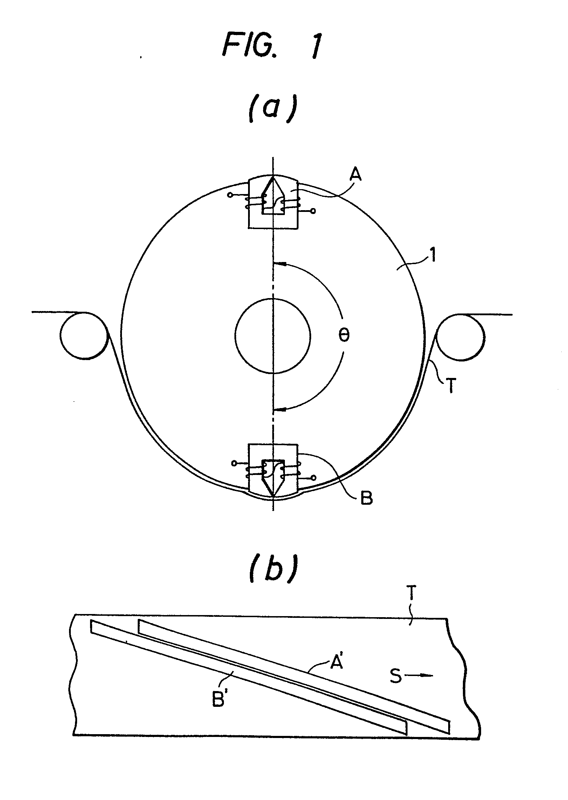

In a VTR for domestic use, magnetic heads A and B have heretofore been installed on a rotary drum 1 as shown in Figure 1 (a). A magnetic tape T, which travels in the direction of an arrow, is obliquely scanned by the magnetic heads A and B, thereby to record or play back television signals. At this time, one trace A' or B' (Figure 1(b)) obliquely scanned by the magnetic head corresponds to one field of the television signal.

An FM modulation system has hitherto been employed for such recording and playback of the television signals. Recently, the use of a PCM system has been attempted for attaining a high picture quality of playback images. When the television signals are put into PCM codes, they become a large quantity of high speed data equal to about 100 Mb/s. The data cannot be recorded or played back by a VTR having only one magnetic head, such as the conventional VTR of the analog system. This is because the limitations of the recording performances of magnetic heads and magnetic tapes in the present situation make it difficult to record and play back such large quantity of high speed data.  It is accordingly necessary to divide the PCM data so as to lower the bit rate, and to record or play back the television signal into or from a plurality of tracks by the use of a multichannel head having a plurality of head chips.

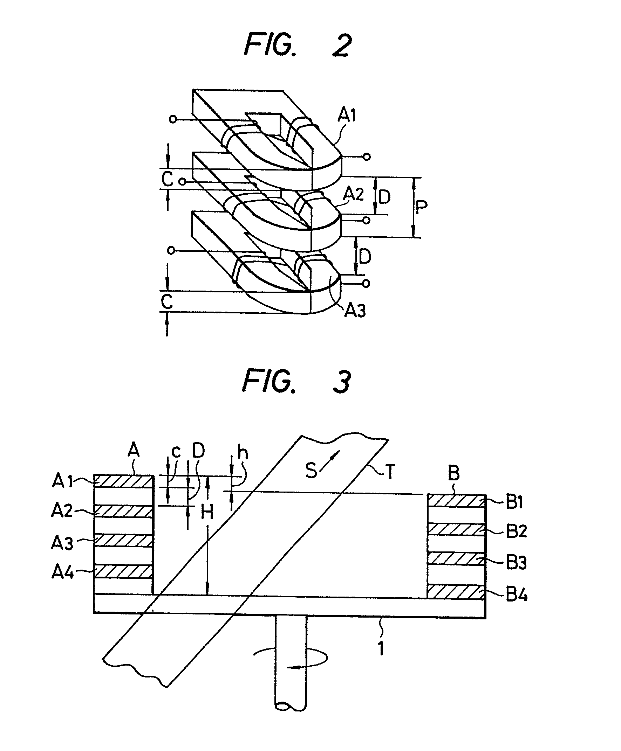

Regarding the multichannel head which is used for such purpose, it is desirable for the enhancement of a recording area density on a tape that the distances of the respective head chips $A_1$, $A_2$ and $A_3$ of the multichannel head illustrated in Figure 2 are as small as possible. In actuality, however, the distances D between the adjacent head chips $A_1$, $A_2$ and $A_3$ must be set at a very large value with respect to the width C of each head chip $A_1$, $A_2$ or $A_3$ (equal to a track width which is recorded by each head chip).  The reason is that a space for inserting a magnetic shielding material is secured in order to prevent the crosstalk of signals attributed to the magnetic leakage between the respectively adjacent head chips.  Thus, the recording and playback with such multichannel head involves the disadvantage that the storage density lowers.

There has also been known a system wherein respective head chips are mounted in staggered fashion so that the spacings between tracks depicted by the adjacent head chips may become substantially zero. However, it has the disadvantage that the mounting adjustments of the respective head chips are difficult, so a high precision is difficult to be attained.

Summary of the Invention:

The present invention has been made in view of such problems, and consists in that the number of multichannel heads to be arranged is determined according to the head chip width of the multichannel head and the distance between the head chips, whereby an enhanced recording density is attained.

Brief Description of the Drawings:

Figure 1(a) is a view showing a head mounting configuration in a conventional VTR, while Figure 1(b) shows the traces of tracks depicted on a magnetic tape by heads in Figure 1(a);

Figure 2 is a model view of a known multichannel head;

Figure 3 is a constructional view of a magnetic recording device embodying the present invention;

Figure 4 is a diagram showing traces depicted on a tape by the device of Figure 3; and

Figure 5 is a diagram of an electric circuit which includes multichannel heads in the present invention.

Detailed Description of the Preferred Embodiments
of the Invention:

Now, an embodiment of the present invention will
be described in detail with reference to Figures 3,
4 and 5.

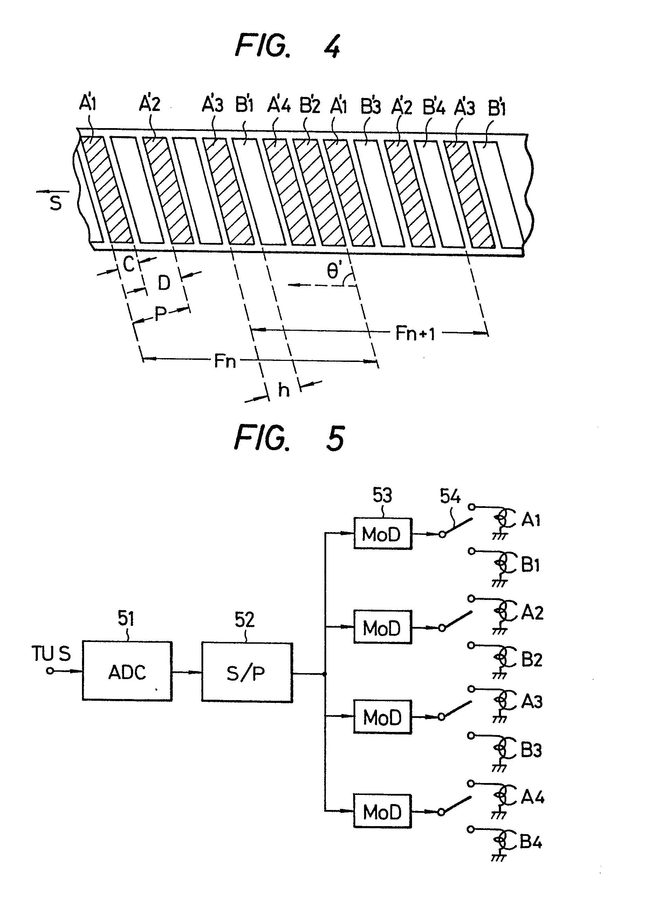

In Figure 3, multichannel heads A and B are installed
on a drum 1 which rotates by $\underline{t}$ revolutions per second.
Each multichannel head A or B has head chips $A_1$, $A_2$,
$A_3$ and $A_4$ or $B_1$, $B_2$, $B_3$ and $B_4$ stacked into a multiple
layer. The multichannel heads in Figure 3 illustrate
a scheme in the case where the heads A and B are arranged
at the opposing positions of the drum 1 ($\theta = 180°$)
as in Figure 1 and where the angle of winding (wrap angle) of a tape T
with respect to the drum 1 is also $180°$. When the
multichannel heads A and B have scanned the magnetic
tape T to record a television signal, the traces of
tracks become as shown in Figure 4. The chip width
of each of the head chips $A_1$, $A_2$, $A_3$ and $A_4$ and $B_1$,
$B_2$, $B_3$ and $B_4$ of the respective heads A and B is C,
and also the width of each of the track traces $A_1'$,
$A_2'$, $A_3'$ and $A_4'$ and $B_1'$, $B_2'$, $B_3'$ and $B_4'$ thereof becomes
C. The signal of a certain specified n-th field $F_n$,
which constitutes the television signal, is recorded
by the multichannel head A. Subsequently, when the drum
rotates over a rotational angle $\theta$ of $180°$, the multichannel head B records the signal of an $(n + 1)$-th field $F_{n+1}$. At this time, the speed S of the magnetic tape T is controlled so that an area on the magnetic tape T shifting by $\frac{1}{2}$ of the n-th field $F_n$ may become the $(n + 1)$-th field. Moreover, in order to prevent the traces of the head B from overlapping those of the head A, a step is provided so that the head B may become lower in height than the head A by $\underline{h}$. Therefore, the trace $B_1'$ of the head chip of the head B just fits in between the traces $A_3'$ and $A_4'$ depicted by the head chips of the head A. In an $(n + 2)$-th field, the traces of the television signal by the head A are similarly recorded in succession.

There will be stated conditions under which the trace of one multichannel head just fits in the interspace D between the traces of the other head in this manner, so that the ideal high-density recording and playback without any vacant space are permitted.

Now, the tape is traveling at the fixed speed S [cm/sec]. The drum 1 rotates by $\underline{t}$ revolutions per second. The heights of the multichannel heads A and B each having $\underline{m}$ channels are supposed to be H. The speed is controlled so that, when the head A has effected one revolution, the traces $F_{n+1}$ on the tape T may adjoin the traces $F_n$ before the revolution. At this time, the following equation holds:

$$S = H \cdot t \cdot \sin \theta' = P \cdot m \cdot t \cdot \sin \theta' = (C + D) \cdot m \cdot t \cdot \sin \theta'$$

$$\cdots\cdots(1)$$

where P denotes the track pitch (= C + D),

and $\theta'$ denotes the angle defined between the traveling direction of the tape and the trace of the track.

It is supposed that such multichannel heads numbering

$\underline{n}$ are arranged on the drum 1 equiangularly in the rotating direction thereof. Herein, the following equation needs to hold in order that the trace of the head chip of one multichannel head may fall in the interspace between the traces depicted by the head chips of the other multichannel

heads:

$$\frac{P}{C} = \frac{D + C}{C} \geq n \qquad\qquad \cdots\cdots(2)$$

n: integer of at least 2.

Further, the steps $\underline{h}$ between the respective multichannel

heads become:

$$h = j P + k \left(\frac{P}{n}\right) \qquad\qquad \cdots\cdots(3)$$

j: any integer,

k: integer $1 \leq k \leq n$.

Although the above has referred to the case where the multichannel heads are arranged equiangularly, it is not always necessary to equiangularly install the heads on the drum. Even when the heads are not arranged equiangularly, the relationship of Equation (2) holds.

Regarding the steps, Equation (3) does not hold. Essentially, however, the multichannel heads may be positioned by adjusting their steps in order that their traces may be recorded on the tape T in interpolating fashion without any overlap.

Figure 5 shows an electric circuit which supplies the television signal TVS to the multichannel heads. The analog signal TVS is converted into a digital signal by an analog-to-digital converter 51. Numeral 52 designates a serial-to-parallel converter, owing to which the signal TVS has the respective fields turned into parallel digital signals in succession. Subsequently, the digital signals are converted by modulators 53 into a signal form suited to a magnetic recording system. Thereafter, the respective fields are selected by switches 54 so as to be supplied to the heads $A_1$, $A_2$, $A_3$, $A_4$ and $B_1$, $B_2$, $B_3$, $B_4$.

As set forth above, the present invention is so constructed that $\underline{n}$ multichannel heads with which the relationship between the width C of a track depicted by each head chip and the distance D between tracks becomes $P/C \geq n$ are installed on a drum. Therefore, it has the effect of enhancing the recording density of a magnetic tape.

BARDEHLE, PAGENBERG, DOST, ALTENBURG & PARTNER

RECHTSANWALTE
JOCHEN PAGENBERG DR. JUR., LL. M HARVARD··
BERNHARD FROHWITTER DIPL.-ING·
GÜNTER FRHR. v. GRAVENREUTH DIPL.-ING (FH)·

PATENTANWÄLTE – EUROPEAN PATENT ATTORNEYS
HEINZ BARDEHLE DIPL.-ING.
WOLFGANG A. DOST DR., DIPL.-CHEM.
UDO W. ALTENBURG DIPL.-PHYS.

0087606

POSTFACH 860620, 8000 MÜNCHEN 86
TELEFON (089) 980361
TELEX 522791 pad d
CABLE: PADBÜRO MÜNCHEN
BÜRO: GALILEIPLATZ 1, 8 MÜNCHEN 80

DATUM February 3, 1983
H 4401-EP lu

## C L A I M S

1. A magnetic recording device having multichannel heads (A, B) which are disposed on a rotary drum (1), characterized in that, letting P denote a track pitch in said each multichannel head, and C denote a track width of each head chip ($A_1$, $A_2$, $A_3$, $A_4$; $B_1$, $B_2$, $B_3$, $B_4$) of said each multi-channel head, said multichannel heads are disposed in a number which is equal to a maximum integral number not greater than a ration (P/C) between said pitch and said track width.

2. A magnetic recording device as defined in Claim 1, characterized in that a rotational speed of said drum (1) is controlled at a predetermined speed of a magnetic tape (T) so that a trace ($F_n$) of one head chip of one of said multichannel heads may adjoin a trace ($F_{n+1}$) of one head chip of another in succession.

3. A magnetic recording device as defined in Claim 1 or 2, characterized in that said multichannel heads (A, B) numbering

0087606

$\underline{n}$ are arranged equiangularly in a rotating direction of said drum (1), and steps $\underline{h}$ between the respectively adjacent multichannel heads are set at $j.p + k.(\frac{p}{n})$ where j: any integer and k: an integer fulfilling $1 \leqq k \leqq n$.

# FIG. 1

## (a)

## (b)

FIG. 2

FIG. 3

## FIG. 4

A'1   A'2   A'3  B'1   A'4  B'2  A'1  B'3  A'2  B'4  A'3  B'1

S

C
D
P
θ'
Fn+1
Fn
h

## FIG. 5

TU S ○— | 51 ADC | — | 52 S/P | — •

53 MoD → 54 → A1
○ B1

MoD → → A2
○ B2

MoD → → A3
○ B3

MoD → → A4
○ B4

European Patent
Office

**EUROPEAN SEARCH REPORT**

| | DOCUMENTS CONSIDERED TO BE RELEVANT | | EP 83101013.7 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | <u>DE - A1 - 3 045 000</u> (SONY)<br>    * Claims 1,7; page 25, line 17-<br>      page 26, line 26; fig. 7-11 *<br>              -- | | H 04 N 5/782 |
| A | <u>GB - A - 2 076 251</u> (SONY)<br>    * Page 5, lines 75-115;<br>      fig. 6a-7 *<br>              -- | | |
| A | <u>DE - A1 - 3 107 069</u> (AMPEX)<br>    * Fig. 5; abstract; page 7,<br>      lines 5-25 *<br>              -- | 1,2 | |
| A | <u>US - A - 3 921 132</u> (BALDWIN)<br>    * Fig. 1; column 3, lines<br>      1-43 *<br>              -- | 3 | |
| ·A | <u>US - A - 3 721 773</u> (KLUGE)<br>    * Fig. 2-3B; column 3, line<br>      63- column 4, line 64 *<br>            ---- | 3 | **TECHNICAL FIELDS SEARCHED (Int. Cl. ³)**<br><br>H 04 N 5/00<br>G 11 B 5/00 |

The present search report has been drawn up for all claims

| Place of search | Date of completion of the search | Examiner |
|---|---|---|
| VIENNA | 06-05-1983 | DIMITROW |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document